# EUROPÄISCHE PATENTSCHRIFT

(11) **EP 1 036 080 B1**
(45) Veröffentlichungstag und Bekanntmachung des Hinweises auf die Patenterteilung: **15.05.2002**
(21) Anmeldenummer: 98956923.1
(22) Anmeldetag: 17.11.1998
(51) Int. Cl.: C07F 9/30

(54) **VERFAHREN ZUR HERSTELLUNG VON DIALKYLPHOSPHINSÄURESALZEN**
METHOD FOR PRODUCING DIALKYLPHOSPHINIC ACID SALTS
PROCEDE POUR LA PREPARATION DE SELS DES ACIDES DIALKYLPHOSPHINIQUES

(30) Priorität: 28.11.1997 DE 19752726; 10.11.1998 DE 19851768
(43) Veröffentlichungstag der Anmeldung: 20.09.2000
(73) Patentinhaber: Clariant GmbH, 65929 Frankfurt am Main (DE)
(72) Erfinder: WEFERLING, Norbert, D-50354 Hürth (DE); SCHMITZ, Hans-Peter, D-50321 Brühl (DE); KOLBE, Günter, D-50169 Kerpen (DE)
(86) Internationale Anmeldenummer: EP9807352
(87) Internationale Veröffentlichungsnummer: WO9928329

(56) Entgegenhaltungen:
- EP-A- 0 699 708
- FR-A- 1 558 606
- US-A- 2 957 931
- US-A- 3 316 293
- US-A- 3 579 576

## Beschreibung

Die Erfindung betrifft ein Verfahren zur Herstellung von Dialkylphosphinsäuresalzen und deren Verwendung.

Aluminium- und Calciumsalze von Dialkylphosphinsäuren sind als Flammschutzmittel bekannt (EP 0 699 708 A1). Sie können nach verschiedenen Verfahren hergestellt werden.

Die DE 24 47 727 A1 beschreibt schwerentflammbare Polyamidformmassen, die ein Salz einer Phosphinsäure oder einer Diphosphinsäure enthalten.

Die vorgenannte EP 0 699 708 A1 beschreibt flammgeschützte Polyesterformmassen, wobei die Polyesterformmassen durch den Zusatz von Calcium- oder Aluminiumsalzen von Phosphin- oder Diphosphinsäuren flammfest ausgerüstet werden. Diese Salze werden durch Umsetzung der entsprechenden Dialkylphosphinsäuren mit Calcium- oder Aluminiumhydroxid erhalten.

Die vorgenannten Verfahren haben insbesondere den Nachteil, daß sie von technisch nicht oder nur unter großem Aufwand herzustellenden Ausgangsverbindungen ausgehen, also in höchstem Maße unwirtschaftlich sind. Dies gilt insbesondere für die besonders bevorzugten Dialkylphosphinsäuren mit kurzen Alkylketten. So ist zum Beispiel für die Herstellung der Diethylphosphinsäure bis heute kein technisch durchgeführtes oder durchführbares Verfahren aufgezeigt worden.

Lediglich die DE 21 00 779 A1 beschreibt ein Verfahren zur Herstellung von Dialkylphosphinsäurealkylestern durch Addition von Olefinen mit 2 bis 22 Kohlenstoffatomen an Alkylphosphonigsäureester.

US-A-3 316 293 beschreibt ein Verfahren zur Herstellung von organischen Phosphorverbindugnen durch Umsetzung von elementarem gelben Phosphor mit Alkylhalogeniden in Gegenwart von bestimmten metallischen Verbindungen in katalytischen Mengen.

Ein analoges Verfahren wird in der US-A-3 579 576 beschrieben.

Schließlich beschreibt die US-A-2 957 931 ein Verfahren zur Herstellung von Dialkylphosphin säuren aus Hypophosphoriger Säure und auch aus Alkylphosphoniger Säure durch Umsetzung derselben mit Olefinen in Gegenwart eines Radikalstarters.

Der Erfindung liegt die Aufgabe zugrunde, ein Verfahren zur Herstellung von Dialkylphosphinsäuresalzen von Metallen zur Verfügung zu stellen, das die vorgenannten Nachteile vermeidet und von elementarem Phosphor als Edukt ausgeht. Darüber hinaus soll die Synthese ohne aufwendige Reinigungsschritte auskommen und auf einfache Art und Weise zu den Metallsalzen von Dialkylphosphinsäuren führen.

Diese Aufgabe wird gelöst durch ein Verfahren der eingangs beschriebenen Art, dadurch gekennzeichnet, daß man
a) elementaren gelben Phosphor mit Alkylhalogeniden in Gegenwart von Alkali- oder Erdalkalihydroxid zu einem Gemisch, welches als Hauptbestandteile die Salze der Alkylphosphonigen, Phosphorigen und Hypophosphorigen Säure enthält, umsetzt,
b) das Gemisch auf einen pH-Wert von weniger als 7 einstellt und dann in Gegenwart eines Radikalstarters mit Olefinen umsetzt und
c) die nach b) erhaltenen Dialkylphosphinsäuren und/oder deren Alkalisalze mit Metallverbindungen von Mg, Ca, Al, Sb, Sn, Ge, Ti, Zn, Fe, Zr, Ce, Bi, Sr, Mn, Li, Na und/oder K zu den Dialkylphosphinsäuresalzen der Metalle umsetzt.

Bevorzugt setzt man im Schritt a) den elementaren gelben Phosphor in Gegenwart von Gemischen von wäßrigen Alkali- und Erdalkalihydroxid mit den Alkylhalogeniden um.

Eine solche Verfahrensweise hat den Vorteil, daß bei der Reaktion entstehendes Phosphit, beispielsweise als Ca(HPO₃), leicht abzutrennen ist.

Bevorzugt werden als Alkylhalogenide Methylchlorid oder Methylbromid eingesetzt.

Bevorzugt ist im Schritt a) ein organisches Lösemittel oder ein Lösemittelgemisch zugegen.

Bevorzugt setzt man im Schritt a) im 2-Phasen-System in Anwesenheit eines Phasen-Transfer-Katalysators um.

Bevorzugt handelt es sich bei dem Phasen-Transfer-Katalysator um Tetraalkylphosphoniumhalogenide, Triphenylalkylphosphoniumhalogenide oder Tetraorganylammoniumhalogenide.

Bevorzugt stellt man im Schritt b) das Gemisch mit Mineral- oder Carbonsäuren auf einen pH-Wert von weniger als 7 ein.

Bevorzugt werden als Radikalstarter Azo-Verbindungen eingesetzt.

Bevorzugt handelt es sich bei den Azo-Verbindungen um kationische und/oder nicht-kationische Azo-Verbindungen.

Bevorzugt werden als kationische Azo-Verbindungen 2,2'-Azobis(2-amidinopropan)-dihydrochlorid oder 2,2'-Azobis(N,N'-dimethylenisobutyramidin)dihydrochlorid eingesetzt.

Bevorzugt werden als nicht-kationische Azo-Verbindungen Azobis(isobutyronitril), 4,4'Azobis(4-cyano-pentansäure) oder 2,2'Azobis(2-methylbutyronitril) eingesetzt.

Bevorzugt werden als Radikalstarter peroxidische anorganische und/oder peroxidische organische Radikalstarter eingesetzt.

Bevorzugt werden als peroxidische anorganische Radikalstarter Wasserstoffperoxid, Ammoniumperoxodisulfat und/oder Kaliumperoxodisulfat eingesetzt.

Bevorzugt werden als peroxidische organische Radikalstarter Dibenzoylperoxid, Di-tert.butylperoxid und/oder Peressigsäure eingesetzt.

Eine breite Auswahl geeigneter Radikalstarter findet sich beispielsweise in Houben-Weyl, Ergänzungsband 20, im Kapitel "Polymerisation durch radikalische Initiierung" auf den Seiten 15-74.

Bevorzugt werden als Olefine lineare oder verzweigte α-Olefine eingesetzt.

Bevorzugt werden als Olefine Ethylen, n-, i-Propylen, n-, i-Buten, n-, i-Penten, n-, i-Hexen, n-, i-Octen, 1-Decen, 1,5-Cyclooctadien, 1,3-Cyclopentadien, Dicyclopentadien und/oder 2,4,4-Trimethylpenten-Isomerengemisch eingesetzt.

Ebenfalls bevorzugt werden als Olefine solche mit innenständiger Doppelbindung, cyclische Olefine sowie cyclische oder offenkettige Diene und/oder Polyene mit 4 bis 20 Kohlenstoffatomen eingesetzt.

Bevorzugt tragen die Olefine eine funktionelle Gruppe.

Als Olefine sind Verbindungen der allgemeinen Formel 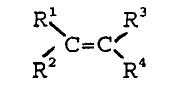 in der R¹-R⁴ gleich oder verschieden sein können und für Wasserstoff, eine Alkylgruppe mit 1 bis 18 C-Atomen, für Phenyl, Benzyl oder alkylsubtituierte Aromaten stehen, geeignet.

Geeignet sind ebenfalls Cycloolefine der Formel 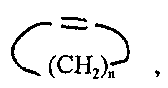 insbesondere Cyclopenten, Cyclohexen, Cycloocten und Cyclodecen.

Eingesetzt werden können auch offenkettige Diene der Formel 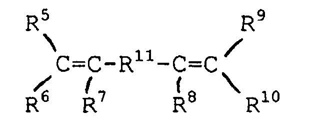 in der R⁵ - R¹⁰ gleich oder verschieden sind und für Wasserstoff oder eine C₁ bis C₆-Alkylgruppe stehen und R¹¹ für (CH₂)ₙ mit n=0 bis 6 steht. Bevorzugt sind hierbei Butadien, Isopren und 1,5-Hexadien.

Als Cyclodiene sind 1,3 Cyclopentadien, Dicyclopentadien und 1,5-Cyclooctadien sowie Norbornadien bevorzugt.

Bevorzugt handelt sich bei den Metallverbindungen um Metalloxide, -hydroxide, -oxidhydroxide, -sulfate, -acetate, -nitrate, -chloride und/oder -alkoxide.

Besonders bevorzugt handelt sich bei den Metallverbindungen um Aluminiumhydroxid und Aluminiumsulfate.

Bevorzugt werden die Dialkylphosphinsäuren bei einer Temperatur von 20 bis 150 °C mit den Metallverbindungen umgesetzt.

Bevorzugt werden die Dialkylphosphinsäuren in essigsaurem und/oder wäßrigem Medium mit den Metallverbindungen umgesetzt. Dies erfolgt ggf. nach Einstellung eines für das jeweilige System Dialkylphosphinsäure/Metallverbindung optimalen pH-Bereichs für die Salzfällung.

Die Erfindung betrifft auch die Verwendung der nach dem erfindungsgemäßen Verfahren hergestellten Dialkylphosphinsäuresalze der Metalle zur Herstellung von Flammschutzmitteln.

Die Erfindung betrifft auch die Verwendung der nach dem erfindungsgemäßen Verfahren hergestellten Dialkylphosphinsäuresalze der Metalle zur Herstellung von Flammschutzmitteln für thermoplastische Polymere und Duroplaste.

Die Erfindung betrifft schließlich auch die Verwendung der nach dem erfindungsgemäßen Verfahren hergestellten Dialkylphosphinsäuresalze der Metalle zur Herstellung von Flammschutzmitteln für Polystyrol, Polyethylenterephthalat, Polybutylenterephthalat und Polyamid.

Die Erfindung betrifft schließlich auch die Verwendung der nach dem erfindungsgemäßen Verfahren hergestellten Dialkylphosphinsäuresalze der Metalle als Additive in polymeren Formmassen.

Die Erfindung wird durch die nachstehenden Beispiele näher erläutert.

### Beispiel 1

### a) Umsetzung von gelbem Phosphor mit Alkylhalogenid

In einem 5-L-Edelstahl-Druckreaktor wurden 2 Liter Toluol, in dem vorher 25 g (0,05 Mol) Tributyl-hexadecylphosphoniumbromid gelöst worden waren, vorgelegt und auf 60 °C vorgeheizt. Es wurden 62 g (2 Mol) geschmolzener gelber Phosphor in den Reaktor eingetragen, unter starkem Rühren auf 0 °C abgekühlt und dann 202 g (4 Mol) Methylchlorid einkondensiert. Danach wurden innerhalb 1 Stunde 1.000 g einer Lösung von 600 g KOH in 400 g Wasser eingetragen, dabei die Temperatur auf 0 °C gehalten und noch 1 Stunde bei dieser Temperatur nachreagiert. Das Produktgemisch wurde auf Raumtemperatur erwärmt, mit 400 ml Wasser verdünnt und anschließend der Reaktor über eine Verbrennung entspannt. Man erhielt zwei homogene flüssige Phasen, die getrennt und analysiert wurden.

Die wäßrige Phase (Auswaage: 1520 g) enthielt 64,2 Mol% Methylphosphonige Säure, 15,8 Mol% Phosphorige Säure und 14,2 Mol% Hypophosphorige Säure sowie 2,8 Mol% Dimethylphosphinsäure in Form ihrer Kaliumsalze. Die organische Phase enthielt als Hauptbestandteil Tributylhexadecylphosphoniumbromid.

### b) Umsetzung der Produkte aus a) mit Olefin

Die wie vorstehend beschrieben erhaltene wäßrige Phase wurde in 600 g Eisessig gelöst und am Rotationsverdampfer auf etwa die Hälfte des ursprünglichen Volumens eingeengt. Das nach Abkühlung auf Raumtemperatur ausgefallene Kaliumacetat wurde abfiltriert und mit 100 g kaltem Eisessig gewaschen. Die Eisessig-Lösungen wurden vereinigt und die erhaltene klare Lösung (1066 g) in einen 2-L-Druckreaktor überführt und auf 85 °C aufgeheizt. Anschließend wurde Ethylen mit 20 bar aufgedrückt. Mittels einer Dosierpumpe wurde innerhalb von 30 Minuten eine Lösung von 10,8 g (0,04 Mol) 2,2'-Azobis(2-amidinopropan)-dihydrochlorid in 50 ml Wasser zugepumpt. Die Reaktionstemperatur wurde für 4 Stunden auf 85 bis 90 °C gehalten. Dabei wurde von Zeit zu Zeit der abgefallene Ethylendruck wieder auf 20 bar eingestellt. Anschließend wurde abgekühlt, entspannt und das Produktgemisch mittels ³¹P-NMR-Spektroskopie untersucht. Die Ausbeute an Produktgemisch betrug 1110 g.

| | |
|---|---|
| Dialkylphosphinsäuren | 79,8 Mol% |
| Methylphosphonige Säure | 0,8 Mol% |
| Phosphorige Säure | 14,9 Mol% |
| Nicht bestimmte Verbindungen | 4,5 Mol% |

### c) Herstellung des Dialkylphosphinsäuresalzes

Das unter b) erhaltene Reaktionsprodukt wurde in einem 2-l-Druckreaktor mit 58,5 g (0,75 Mol) Aluminiumhydroxid bei 120 °C für 6 h umgesetzt. Man kühlte auf Raumtemperatur ab und filtrierte die erhaltene Suspension über eine Drucknutsche. Es wurde nacheinander mit 250 g Eisessig, 500 g destilliertem Wasser und 200 g Aceton gewaschen. Das farblose Reaktionsprodukt wurde im Ölpumpenvakuum bei 140 °C für 8 h getrocknet. Man erhielt 228 g farbloses, völlig wasserunlösliches Produkt mit einem Schüttgewicht von 230 g/l.

Die Analyse ergab einen P-Gehalt von 26,3 % und einen Al-Gehalt von 9,4 %. Zur weiteren Analyse wurde eine Probe in 25%iger wäßriger NaOH gelöst und ³¹P-NMR-spektroskopisch vermessen.

| | |
|---|---|
| Dimethylphosphinsäure-Na-Salz | 2,6 Mol% |
| Methyl-ethylphosphinsäure-Na-Salz | 64,6 Mol% |
| Diethylphosphinsäure-Na-Salz | 13,8 Mol% |
| Methylphosphonige Säure-Na-Salz | 0,1 Mol% |
| Ethylphosphonige Säure-Na-Salz | 0,3 Mol% |
| Phosphorige Säure Na-Salz | 15,2 Mol% |
| Nicht bestimmte Verbindungen | 3,4 Mol% |

### Beispiel 2

### a) Umsetzung von gelbem Phosphor mit Alkylhalogenid

In einem 5 L Edelstahl-Druckreaktor wurde eine Lösung von 26,1 (0.05 Mol) Tributylhexadecylphosphoniumbromid in 1000 mL Toluol vorgelegt und auf 60°C vorgeheizt. Nach Zugabe von 62 g (2 Mol) gelbem Phosphor wurde unter intensivem Rühren auf-10°C abgekühlt und dann 202 g (4 Mol) Methylchlorid einkondensiert. Danach wurde innerhalb 2 Stunden 400 g 50%ige wässrige Natronlauge zudosiert, wobei die Temperatur auf -10°C gehalten wurde. Innerhalb einer Stunde wurde 400 g Wasser zugegeben, danach eine weitere Stunde nachgerührt, auf Raumtemperatur erwärmt und anschließend der Reaktor über eine Verbrennung entspannt. Man erhielt zwei homogene flüssige Phasen, die getrennt und analysiert wurden.

Die wäßrige Phase (Auswaage: 920 g) enthielt 65,6 Mol% Methylphosphonige Säure, 14,9 Mol% Phosphorige Säure und 13,7 Mol% Hypophosphorige Säure sowie 2,8 Mol% Dimethylphosphinsäure in Form ihrer Natriumsalzesalze.

### b) Umsetzung der Produkte aus a) mit Olefin

Die obige Lösung wurde mit 600 g Eisessig versetzt. Nach Abdestillation des enthaltenen Wassers wurde das ausgefallene Natriumacetat abfiltriert und mit 100 g Eisessig gewaschen. Die Eisessig-Lösungen wurden vereinigt und die erhaltene klare Lösung in einen 2-L-Druckreaktor überführt. Nach Aufheizen der Reaktionsmischung auf 100°C wurde über ein auf 10 bar eingestelltes Reduzierventil Ethylen bis zur Sättigung in den Reaktor eingeleitet.

Über einen Zeitraum von 6 h wurde unter ständigem Rühren bei einem Ethylendruck von 10 bar und einer Temperatur von 100-105°C eine Lösung von 6,6 g (0,04 Mol) Azobis(isobutyronitril) (AIBN) in 100 g Essigsäure gleichmäßig zudosiert. Nach einer Nachreaktionszeit von 1 h, Entspannung des Reaktors und Abkühlung auf Raumtemperatur wurde der Inhalt analysiert:

| | | |
|---|---|---|
| ³¹P-NMR | Dialkylphosphinsäuren | 80,6 Mol% |
| | Methylphosphonige Säure | 0,8 Mol% |
| | Phosphorige Säure | 14,8 Mol% |
| | Nicht bestimmte Verbindungen | 3,8 Mol% |

Das erhaltene Reaktionsprodukt wurde, wie im Beispiel 1c) beschrieben, mit 58,5 g (0.75 Mol) Aluminiumhydroxid umgesetzt und aufgarbeitet. Man erhielt 230 g farbloses Produkt. Die Analyse ergab einen P-Gehalt von 25,8 % und einen Al-Gehalt von 9,2 %. Zur weiteren Analyse wurde eine Probe in 25%iger wäßriger NaOH gelöst und ³¹P-NMR-spektroskopisch vermessen:

| | |
|---|---|
| Dimethylphosphinsäure-Na-Salz | 2,7 Mol% |
| Methylethylphosphinsäure-Na-Salz | 66,0 Mol% |
| Diethylphosphinsäure-Na-Salz | 13,5 Mol% |
| Ethylphosphonige Säure-Na-Salz | 0,1 Mol% |
| Methylphosphonige Säure-Na-Salz | 0,4 Mol% |
| Phosphorige Säure-Na-Salz | 13,8 Mol% |
| Nicht bestimmte Verbindungen | 3,5 Mol% |

### Beispiel 3

### a) Umsetzung von gelbem Phosphor mit Alkylhalogenid

In einem 5 L Edelstahl-Druckreaktor wurde eine Lösung von 29 g (0.05 Mol) Tetraoctylphosphoniumbromid in 1000 mL Toluol vorgelegt und auf 60°C vorgeheizt. Nach Zugabe von 62 g (2 Mol) gelbem Phosphor wurde unter intensivem Rühren auf-10°C abgekühlt und dann 202 g (4 Mol) Methylchlorid einkondensiert. Danach wurde auf 20°C erwärmt und innerhalb von 2 Stunden 400 g 50%ige wässrige Natronlauge zudosiert, wobei die Temperatur auf 20°C gehalten wurde. Innerhalb einer Stunde wurde 400 g Wasser zugegeben, danach eine weitere Stunde nachgerührt, auf Raumtemperatur erwärmt und anschließend der Reaktor über eine Verbrennung entspannt. Man erhielt zwei homogene flüssige Phasen, die getrennt und analysiert wurden.
Die wäßrige Phase (Auswaage: 940 g) enthielt 51,2 Mol% Methylphosphonige Säure, 24,7 Mol% Phosphorige Säure und 18,5 Mol% Hypophosphorige Säure sowie 2,6 Mol% Dimethylphosphinsäure in Form ihrer Natriumsalze erhalten.

### b) Umsetzung der Produkte aus a) mit Olefin

Die Lösung wurde mit 600 g Eisessig versetzt. Nach Abdestillation des enthaltenen Wassers wurde das ausgefallene Natriumacetat abfiltriert und mit 100 g Eisessig gewaschen. Die Eisessig-Lösungen wurden vereinigt und die erhaltene klare Lösung in einen 2-L-Druckreaktor überführt. Nach Aufheizen der Reaktionsmischung auf 100°C wurde über ein auf 5 bar eingestelltes Reduzierventil Ethylen bis zur Sättigung in den Reaktor eingeleitet. Über einen Zeitraum von 6 h wurde unter ständigem Rühren bei einem Ethylendruck von 5 bar und einer Temperatur von 100-105°C eine Lösung von 9,7 g (0,04 Mol) Dibenzoylperoxid in 100 g Essigsäure gleichmäßig zudosiert. Nach einer Nachreaktionszeit von 1 h, Entspannung des Reaktors und Abkühlung auf Raumtemperatur wurde der Inhalt analysiert:

| | | |
|---|---|---|
| ³¹P-NMR | Dialkylphosphinsäuren | 68,8 Mol% |
| | Methylphosphonige Säure | 0,4 Mol% |
| | Phosphorige Säure | 26,1 Mol% |
| | Nicht bestimmte Verbindungen | 4,7 Mol% |

Das erhaltene Reaktionsprodukt wurde, wie unter 1c) beschrieben, mit 58,5 g (0.75 Mol) Aluminiumhydroxid umgesetzt und aufgarbeitet. Man erhielt 230 g farbloses Produkt. Die Analyse ergab einen P-Gehalt von 26,3 % und einen Al-Gehalt von 9,4 %. Zur weiteren Analyse wurde eine Probe in 25%iger wäßriger NaOH gelöst und ³¹P-NMR-spektroskopisch vermessen:

| | |
|---|---|
| Dimethylphosphinsäure-Na-Salz | 2,9 Mol% |
| Methylethylphosphinsäure-Na-Salz | 51,1 Mol% |
| Diethylphosphinsäure-Na-Salz | 17,0 Mol% |
| Ethylphosphonige Säure-Na-Salz | 0,2 Mol% |
| Methylphosphonige Säure-Na-Salz | 0,5 Mol% |
| Phosphorige Säure-Na-Salz | 24,9 Mol% |
| Nicht bestimmte Verbindungen | 3,4 Mol% |

## Patentansprüche

1. Verfahren zur Herstellung von Dialkylphosphinsäuresalzen, **dadurch gekennzeichnet, daß** man
a) elementaren gelben Phosphor mit Alkylhalogeniden in Gegenwart von Alkali- oder Erdalkalihydroxid zu einem Gemisch, welches als Hauptbestandteile die Salze der Alkylphosphonigen, Phosphorigen und Hypophosphorigen Säure enthält, umsetzt,
b) das Gemisch auf einen pH-Wert von weniger als 7 einstellt und dann in Gegenwart eines Radikalstarters mit Olefinen umsetzt und
c) die nach b) erhaltenen Dialkylphosphinsäuren und/oder deren Alkalisalze mit Metallverbindungen von Mg, Ca, Al, Sb, Sn, Ge, Ti, Zn, Fe, Zr, Ce, Bi, Sr, Mn, Li, Na und/oder K zu den Dialkylphosphinsäuresalzen der Metalle umsetzt.

2. Verfahren nach Anspruch 1, **dadurch gekennzeichnet, daß** man im Schritt a) den elementaren gelben Phosphor in Gegenwart von Gemischen von wäßrigem Alkali- und Erdalkalihydroxid mit den Alkylhalogeniden umsetzt.

3. Verfahren nach Anspruch 1 oder 2, **dadurch gekennzeichnet, daß** als Alkylhalogenide Methylchlorid oder Methylbromid eingesetzt werden.

4. Verfahren nach einem oder mehreren der Ansprüche 1 bis 3, **dadurch gekennzeichnet, daß** im Schritt a) ein organisches Lösemittel oder ein Lösemittelgemisch zugegen ist.

5. Verfahren nach einem oder mehreren der Ansprüche 1 bis 4, **dadurch gekennzeichnet, daß** man im Schritt a) im 2-Phasen-System in Anwesenheit eines Phasen-Transfer-Katalysators umsetzt.

6. Verfahren nach Anspruch 5, **dadurch gekennzeichnet, daß** es sich bei dem Phasen-Transfer-Katalysator um Tetraalkylphosphoniumhalogenide, Triphenylalkylphosphoniumhalogenide oder Tetraorganylammoniumhalogenide handelt.

7. Verfahren nach einem oder mehreren der Ansprüche 1 bis 6, **dadurch gekennzeichnet, daß** man im Schritt b) das Gemisch mit Mineral- oder Carbonsäuren auf einen pH-Wert von weniger als 7 einstellt.

8. Verfahren nach einem oder mehreren der Ansprüche 1 bis 7, **dadurch gekennzeichnet, daß** als Radikalstarter Azo-Verbindungen eingesetzt werden.

9. Verfahren nach Anspruch 8, **dadurch gekennzeichnet, daß** es sich bei den Azo-Verbindungen um kationische und/oder nicht-kationische Azo-Verbindungen handelt.

10. Verfahren nach Anspruch 8 oder 9, **dadurch gekennzeichnet, daß** als kationische Azo-Verbindungen 2,2'-Azobis(2-amidinopropan)dihydrochlorid oder 2,2'-Azobis(N,N'-dimethylenisobutyramidin)dihydrochlorid eingesetzt werden.

11. Verfahren nach Anspruch 8 oder 9, **dadurch gekennzeichnet, daß** als nicht-kationische Azo-Verbindungen Azobis(isobutyronitril), 4,4'Azobis(4-cyano-pentansäure) oder 2,2'Azobis(2-methylbutyronitril) eingesetzt werden.

12. Verfahren nach einem oder mehreren der Ansprüche 1 bis 7, **dadurch gekennzeichnet, daß** als Radikalstarter peroxidische anorganische und/oder peroxidische organische Radikalstarter eingesetzt werden.

13. Verfahren nach Anspruch 12, **dadurch gekennzeichnet, daß** daß als peroxidische anorganische Radikalstarter Wasserstoffperoxid, Ammoniumperoxodisulfat und/oder Kaliumperoxodisulfat eingesetzt werden.

14. Verfahren nach Anspruch 12, **dadurch gekennzeichnet, daß** daß als peroxidischc organische Radikalstarter Dibenzoylperoxid, Di-tert.-butylperoxid und/oder Peressigsäure eingesetzt werden.

15. Verfahren nach einem oder mehreren der Ansprüche 1 bis 14, **dadurch gekennzeichnet, daß** als Olefine lineare oder verzweigte α-Olefine eingesetzt werden.

16. Verfahren nach einem oder mehreren der Ansprüche 1 bis 15, **dadurch gekennzeichnet, daß** als Olefine Ethylen, n-, i-Propylen, n-, i-Buten, n-, i-Penten, n-, i-Hexen, n-, i-Octen, 1-Decen, 1,3-Cyclooctadien, 1,3-cyclopentadien, Dicyclopentadien und/oder 2,4,4-Trimethylpenten-Isomerengemisch eingesetzt werden.

17. Verfahren nach einem oder mehreren der Ansprüche 1 bis 14, **dadurch gekennzeichnet, daß** als Olefine solche mit innenständiger Doppelbindung, cyclische Olefine sowie cyclische oder offenkettige Diene und/oder Polyene mit 4 bis 20 Kohlenstoffatomen eingesetzt werden.

18. Verfahren nach einem oder mehreren der Ansprüche 1 bis 17, **dadurch gekennzeichnet, daß** die Olefine eine funktionelle Gruppen tragen.

19. Verfahren nach einem oder mehreren der Ansprüche 1 bis 18, **dadurch gekennzeichnet, daß** es sich bei den Metallverbindungen um Metalloxide, -hydroxide, -oxidhydroxide, -sulfate, -acetate, -nitrate, -chloride und/oder -alkoxide handelt.

20. Verfahren nach einem oder mehreren der Ansprüche 1 bis 19, **dadurch gekennzeichnet, daß** es sich bei den Metallverbindungen um Aluminiumoxid oder Aluminiumsulfate handelt

21. Verfahren nach einem oder mehreren der Ansprüche 1 bis 20, **dadurch gekennzeichnet, daß** die Dialkylphosphinsäuren bei einer Temperatur von 20 bis 150 °C mit den Metallverbindungen umgesetzt werden.

22. Verfahren nach einem oder mehreren der Ansprüche 1 bis 21, **dadurch gekennzeichnet, daß** die Dialkylphosphinsäuren in essigsaurem und/oder wäßrigem Medium mit den Metallverbindungen umgesetzt werden.

## Claims

1. A process for preparing dialkylphosphinate salts, which comprises
a) reacting elemental yellow phosphorus with alkyl halides in the presence of alkali metal hydroxide or alkaline earth metal hydroxide to form a mixture which comprises as main constituents the salts of alkylphosphonous, phosphorous and hypophosphorous acids,
b) adjusting the mixture to a pH below 7 and then reacting the mixture with olefins in the presence of a free-radical initiator and
c) reacting the dialkylphosphinic acids obtained according to b) and/or alkali metal salts thereof with metal compounds of Mg, Ca, Al, Sb, Sn, Ge, Ti, Zn, Fe, Zr, Ce, Bi, Sr, Mn, Li, Na and/or K to give the metal dialkylphosphinate salts.

2. The process as claimed in claim 1, wherein, in step a), the elemental yellow phosphorus is reacted with the alkyl halides in the presence of mixtures of aqueous alkali metal hydroxide and alkaline earth metal hydroxide.

3. The process as claimed in claim 1 or 2, wherein, as alkyl halides, use is made of methyl chloride or methyl bromide.

4. The process as claimed in one or more of claims 1 to 3, wherein, in step a), an organic solvent or a solvent mixture is present.

5. The process as claimed in one or more of claims 1 to 4, wherein, in step a), the reaction is carried out in a 2-phase system in the presence of a phase-transfer catalyst.

6. The process as claimed in claim 5, wherein the phase-transfer catalyst is tetraalkylphosphonium halides, triphenylalkylphosphonium halides or tetraorganylammonium halides.

7. The process as claimed in one or more of claims 1 to 6, wherein, in step b), the mixture is adjusted to a pH below 7 using mineral acids or carboxylic acids.

8. The process as claimed in one or more of claims 1 to 7, wherein, as free-radical initiator, use is made of azo compounds.

9. The process as claimed in claim 8, wherein the azo compounds are cationic and/or non-cationic azo compounds.

10. The process as claimed in claim 8 or 9, wherein, as cationic azo compounds, use is made of 2,2'-azobis(2-amidinopropane) dihydrochloride or 2,2'-azobis(N,N'-dimethyleneisobutyramidine) dihydrochloride.

11. The process as claimed in claim 8 or 9, wherein, as non-cationic azo compounds, use is made of azobis(isobutyronitrile), 4,4'-azobis(4-cyanopentanoic acid) or 2,2'-azobis(2-methylbutyronitrile).

12. The process as claimed in one or more of claims 1 to 7, wherein, as free-radical initiator, use is made of inorganic peroxide and/or organic peroxide free-radical initiators.

13. The process as claimed in claim 12, wherein, as inorganic peroxide free-radical initiators, use is made of hydrogen peroxide, ammonium peroxodisulfate and/or potassium peroxodisulfate.

14. The process as claimed in claim 12, wherein, as organic peroxide free-radical initiators, use is made of dibenzoyl peroxide, di-tert-butyl peroxide and/or peracetic acid.

15. The process as claimed in one or more of claims 1 to 14, wherein, as olefins, use is made of unbranched or branched α-olefins.

16. The process as claimed in one or more of claims 1 to 15, wherein, as olefins, use is made of ethylene, n-, i-propylene, n-, i-butene, n-, i-pentene, n-, i-hexene, n-, i-octene, 1-decene, 1,3-cyclooctadiene, 1,3-cyclopentadiene, dicyclopentadiene and/or 2,4,4-trimethylpentene isomeric mixture.

17. The process as claimed in one or more of claims 1 to 14, wherein, as olefins, use is made of those having an internal double bond, cyclic olefins and cyclic or open-chain dienes and/or polyenes having from 4 to 20 carbon atoms.

18. The process as claimed in one or more of claims 1 to 17, wherein the olefins bear a functional group.

19. The process as claimed in one or more of claims 1 to 18, wherein the metal compounds are metal oxides, metal hydroxides, metal hydroxide oxides, metal sulfates, metal acetates, metal nitrates, metal chlorides and/or metal alkoxides.

20. The process as claimed in one or more of claims 1 to 19, wherein the metal compounds are aluminum oxide or aluminum sulfates.

21. The process as claimed in one or more of claims 1 to 20, wherein the dialkylphosphinic acids are reacted with the metal compounds at a temperature of from 20 to 150°C.

22. The process as claimed in one or more of claims 1 to 21, wherein the dialkylphosphinic acids are reacted with the metal compounds in an acetic acid and/or aqueous medium.

## Revendications

1. Procédé pour la préparation de sels d'acide dialkylphosphinique, **caractérisé en ce qu'**on
a) met à réagir du phosphore jaune élémentaire avec des halogénures d'alkyle en présence d'hydroxyde de métaux alcalins ou alcalino-terreux pour obtenir un mélange qui contient comme constituants principaux les sels de l'acide alkyl-phosphonique, phosphorique et hypophosphorique,
b) ajuste le mélange à une valeur de pH de moins de 7 et on le met ensuite à réagir en présence d'un amorceur radicalaire avec des oléfines et
c) met à réagir les acides dialkylphosphiniques obtenus selon b) et/ou leurs sels de métaux alcalins avec des composés métalliques de Mg, Ca, Al, Sb, Sn, Ge, Ti, Zn, Fe, Zr, Ce, Bi, Sr, Mn, Li, Na et/ou K pour obtenir les sels d'acide dialkylphosphinique des métaux.

2. Procédé selon la revendication 1, **caractérisé en ce qu'**on met à réagir à l'étape a) le phosphore jaune élémentaire en présence de mélanges d'hydroxydes aqueux de métaux alcalins et alcalino-terreux avec les halogénures d'alkyle.

3. Procédé selon la revendication 1 ou 2, **caractérisé en ce qu'**on utilise comme. halogénures d'alkyle le chlorure de méthyle ou le bromure de méthyle.

4. Procédé selon une ou plusieurs des revendications 1 à 3, **caractérisé en ce qu'**on ajoute à l'étape a) un solvant organique ou un mélange de solvants organiques.

5. Procédé selon une ou plusieurs des revendications 1 à 4, **caractérisé en ce qu'**on met à réagir à l'étape a) dans le système à 2 phases en présence d'un catalyseur de transfert de phase.

6. Procédé selon la revendication 5, **caractérisé en ce que** pour le catalyseur de transfert de phase il s'agit d'halogénures de tétraalkylphosphonium, d'halogénures de triphénylalkylphosphonium ou d'halogénures de tétra-organylammonium.

7. Procédé selon une ou plusieurs des revendications 1 à 6, **caractérisé en ce qu'**on ajuste à l'étape b) le mélange avec des acides minéraux ou carboxyliques à une valeur de pH de moins de 7.

8. Procédé selon une ou plusieurs des revendications 1 à 7, **caractérisé en ce qu'**on utilise comme amorceur radicalaire des composés azoïques.

9. Procédé selon la revendication 8, **caractérisé en ce qu'**il s'agit pour les composés azoïques de composés azoïques cationiques et/ou non cationiques.

10. Procédé selon la revendication 8 ou 9, **caractérisé en ce qu'**on utilise comme composés azoïques cationiques le dichlorhydrate de 2,2'-azobis(2-amidinopropane) ou le dichlorhydrate de 2,2'-azobis(N,N'-diméthylènisobutyramidine).

11. Procédé selon la revendication 8 ou 9, **caractérisé en ce qu'**on utilise comme composés azoïques non cationiques l'azobis(isobutyronitrile), le 4,4'-azobis-(acide 4-cyano-pentanoïque) ou le 2,2'-azobis-(2-méthylbutyronitrile).

12. Procédé selon une ou plusieurs des revendications 1 à 7, **caractérisé en ce qu'**on utilise comme amorceur radicalaire des amorceurs radicalaires peroxydiques inorganiques et/ou peroxydiques organiques.

13. Procédé selon la revendication 12, **caractérisé en ce qu'**on utilise comme amorceurs radicalaires peroxydiques inorganiques le peroxyde d'hydrogène, le peroxodisulfate d'ammonium et/ou le peroxodisulfate de potassium.

14. Procédé selon la revendication 12, **caractérisé en ce qu'**on utilise comme amorceurs radicalaires peroxydiques organiques le peroxyde de dibenzoyle, le peroxyde de di-tert.-butyle et/ou l'acide peracétique.

15. Procédé selon une ou plusieurs des revendications 1 à 14, **caractérisé en ce qu'**on utilise comme oléfines des α-oléfines linéaires ou ramifiées.

16. Procédé selon une ou plusieurs des revendications 1 à 15, **caractérisé en ce qu'**on utilise comme oléfines l'éthylène, le n-, i-propylène, le n-, i-butène, le n-, i-pentène, le n-, i-hexène, le n-, i-octène, le 1-décène, le 1,3-cyclooctadiène, le 1,3-cyclopentadiène, le dicyclopentadiène et/ou un mélange d'isomères de 2,4,4-triméthylpentène.

17. Procédé selon une ou plusieurs des revendications 1 à 14, **caractérisé en ce qu'**on utilise comme oléfines celles ayant une double liaison placée à l'intérieur, les oléfines cycliques ainsi que les diènes et/ou polyènes cycliques ou à chaîne ouverte ayant de 4 à 20 atomes de carbone.

18. Procédé selon une ou plusieurs des revendications 1 à 17, **caractérisé en ce que** les oléfines portent un groupe fonctionnel.

19. Procédé selon une ou plusieurs des revendications 1 à 18, **caractérisé en ce qu'**il s'agit pour les composés métalliques d'oxydes, d'hydroxydes, d'oxyhydroxydes, de sulfates, d'acétates, de nitrates, de chlorures et/ou d'alcoxydes de métaux.

20. Procédé selon une ou plusieurs des revendications 1 à 19, **caractérisé en ce qu'**il s'agit pour les composés métalliques d'oxyde d'aluminium, ou de sulfate d'aluminium.

21. Procédé selon une ou plusieurs des revendications 1 à 20, **caractérisé en ce qu'**on met à réagir les acides dialkyl-phosphiniques à une température de 20 à 150°C avec les composés métalliques.

22. Procédé selon une ou plusieurs des revendications 1 à 21, **caractérisé en ce qu'**on met à réagir les acides dialkylphosphiniques dans un milieu acide acétique et/ou aqueux avec les composés métalliques.
